# EUROPÄISCHE PATENTSCHRIFT

(11) **EP 0 858 417 B1**
(45) Veröffentlichungstag und Bekanntmachung des Hinweises auf die Patenterteilung: **27.08.2003**
(21) Anmeldenummer: 97939961.5
(22) Anmeldetag: 19.08.1997
(51) Int. Cl.: B65D 51/16, A61J 9/04

(54) **Vorrichtung zum Druckausgleich in unter Unterdruck stehenden Gefässen**
Device for pressure compensation in vessels with low pressure
Dispositif pour l'équilibrage de la pression dans des récipients sous dépression

(30) Priorität: 20.08.1996 DE 19633472
(43) Veröffentlichungstag der Anmeldung: 19.08.1998
(73) Patentinhaber: Meyer, Dieter, 31542 Bad Nenndorf (DE); Braun, Hans-Peter, 31535 Neustadt (DE)
(72) Erfinder: Meyer, Dieter, 31542 Bad Nenndorf (DE); Braun, Hans-Peter, 31535 Neustadt (DE)
(74) Vertreter: Körner, Peter
(86) Internationale Anmeldenummer: DE9701775
(87) Internationale Veröffentlichungsnummer: WO98007634

(56) Entgegenhaltungen:
- DE-U- 9 112 190
- FR-A- 322 012
- FR-A- 353 161
- FR-A- 393 206
- GB-A- 260 910
- US-A- 2 114 823

## Beschreibung

Die Erfindung betrifft eine Vorrichtung zum Druckausgleich in unter Unterdruck stehenden Gefäßen nach dem Oberbegriff des Anspruchs 1.

Aus der WO 95/15 285 ist eine Vorrichtung bekannt, bei der zum Ausgleich eines Überdrucks innerhalb eines Gefäßes eine Ventilöffnung in einem flachen Bereich eines Deckels angeordnet ist. Die Ventilöffnung bildet im Querschnitt u-förmige Nuten, die sich von innen nach außen im Abstand verringern. Die abdichtende Bereiche dieses Ventils werden somit nur von den äußeren, sich gegenüber stehenden Kanten der Nutflanken gebildet. Die Nuten verlaufen senkrecht von der inneren zur äußeren Oberfläche der Wandung des Deckels.

Aus der DE 88 10 049 U1 ist ein Rückschlagventil für eine Trinkflasche bekannt, das als in einem Käfig bewegliche Kugel ausgebildet ist. In diesem Käfig sind von außen unzugängliche Bereiche vorhanden, die leicht verschmutzen und dabei Verkrustungen bilden können, die die Beweglichkeit der Kugel beeinträchtigen oder aber auch Dichtwirkung vermindern können. Da diese Bereiche nicht oder schwer zu reinigen sind, ist das Ventil für hygienische Anwendungen, für die es an sich gedacht ist, nicht geeignet.

Aus der FR 393 206 ist auch ein Rückschlagventil für ein Gefäß bekannt

Der Erfindung liegt die Aufgabe zugrunde, eine Vorrichtung zum Druckausgleich in unter Unterdruck stehenden Gefäßen zu schaffen, die als Rückschlagventil eine Durchlässigkeit in der einen und eine Sperre in der anderen Richtung bietet und durch ihren Aufbau leicht zu reinigen und auf Sauberkeit zu kontrollieren ist.

Diese Aufgabe wird bei einer Vorrichtung nach dem Oberbegriff des Anspruchs 1 durch die im kennzeichnenden Teil angegebenen Merkmale gelöst. Weiterbildungen und vorteilhafte Ausgestaltungen ergeben sich aus den Unteransprüchen.

Bei der erfindungsgemäßen Vorrichtung sorgt die Wölbung dafür, daß das Ventil bei einem Differenzdruck, der im Inneren der Wölbung höher als außen ist, öffnet und im umgekehrten Falle schließt. Die Vorrichtung kann daher gleichermaßen als Rückschlagventil zum Druckausgleich für Unterdruck verwendet werden. Allein die Ausrichtung der Wölbung in bezug auf das Gefäß entscheidet über diese Eigenschaft.

Bei Überdruck an der Innenseite der Wölbung werden die Dichtlippe gespreizt und somit ein Gasdurchtritt freigegeben, währen bei umgekehrter Druckbeaufschlagung von außen auf die Wölbung die Dichtlippen zusammengepreßt werden und damit die Schlitzöffnung fest verschließen.

Durch die schräg verlaufende Schlitzöffnung bei der Erfindung wird zudem eine Vergrößerung der Oberfläche der Dichtlippen gegenüber einer senkrechten Ausrichtung zur Kontur der Oberfläche erreicht. Dies vergrößert die dichtende Fläche und verbessert die Wirksamkeit der Dichtung. Da die Schlitzöffnung von beiden Seiten zugänglich ist, ist eine einfache Reinigung und Kontrolle möglich. Dadurch ist die Vorrichtung geeignet, strenge hygienische Anforderungen zu erfüllen und im Lebensmittelbereich eingesetzt zu werden.

Die Schlitzöffnung kann in Projektion auf die Wölbung durch einen Kreisringabschnitt begrenzt sein.

Diese Ausgestaltung gewährleistet, daß je nach Richtung der Druckdifferenzen zwischen der Innen- und der Außenseite der Wölbung die Dichtlippen gleichmäßig zusammen oder auseinandergedrückt werden. So wird eine ungleichmäßige Materialbeanspruchung vermieden und eine hohe Lebensdauer des elastischen Materials erzielt.

Die Wölbung kann die Form eines Kugelabschnitts oder eines Kegels oder Kegelstumpfes besitzen.

Durch die rotationssymmetrische Form wir die Wölbung bei Druckdifferenzen zwischen der Innen- und der Außenseite gleichmäßig belastet. Knicke, die die Lebensdauer des elastischen Materials beeinträchtigen würden, können so nicht entstehen.

Die Wandung aus elastischem Material kann als Stirnwand eines Gefäßes lösbar mit einem Gefäßmantel verbunden sein.

Durch diesen Aufbau ist es möglich, ein Gefäß nachträglich mit der erfindungsgemäßen Vorrichtung zu versehen oder eine schadhafte Vorrichtung auszuwechseln. Durch die Demontagemöglichkeit ist zudem auch die Reinigung von beiden Seiten und die Kontrolle auf Sauberkeit erleichtert.

Die Ventilöffnung kann mehrere Schlitzöffnungen umfassen.

Hierdurch kann ein großer gesamter Ventilquerschnitt erzielt werden, ohne daß dadurch die Dichtungswirkung bei geringem oder keinem Differenzdruck, die dann im wesentlichen durch die im elastischen Material vorhandene Spannung aufrechterhalten wird, beeinträchtigt wird.

Ferner kann die Vorrichtung bezogen auf das Gefäß bei Ausgleich von Überdruck nach außen gewölbt und bei Ausgleich von Unterdruck nach innen gewölbt sein.

Nachfolgend wird die Erfindung anhand der Zeichnung erläutert. In dieser zeigen:
- Fig. 1: einen Längsschnitt durch eine Vorrichtung und
- Fig. 2: eine Draufsicht auf die Vorrichtung.

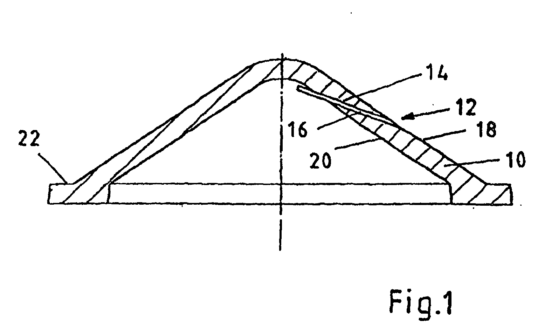

Bei der Darstellung nach Fig. 1 ist die Vorrichtung nach Art eines Kegels gestaltet. Dieser besitzt außen einen umlaufenden Flansch 22, über den er mit dem Mantel eines Gefäßes verbindbar ist. Statt dessen kann der Rand aber auch so ausgebildet sein, daß er über einen Kragen des Gefäßes gestülpt wird und so selbständig am Gefäß befestigt ist.

In dem schrägen Bereich einer Wandung 10 der Vorrichtung befindet sich eine Ventilöffnung, die durch eine Schlitzöffnung 12 mit gegenüberliegenden, parallelen Dichtlippen 14, 16 gebildet ist. Die Dichtlippen 14, 16 werden hierbei durch die Flächen der Wandung 10 gebildet, die durch die Bildung eines Schlitzes entstanden sind. Da die Schlitzöffnung 12 in einem spitzen Winkel zu den äußeren Oberflächen 18, 20 der Wandung 10 verläuft, ist die Schnittlinie länger als die Wandungsdikke und damit auch die von den Dichtlippen 14, 16 gebildete wirksame Dichtfläche. Bei einem Druckgefälle in Richtung des Pfeils F1 werden die Dichtlippen 14, 16 gespreizt und dabei geöffnet, so daß ein Druckausgleich erfolgen kann, während bei einem Druckgefälle in Richtung der Pfeils F2 die Dichtlippen 14, 16 aufeinander gepreßt werden und dadurch ein Druckausgleich in diese Richtung unterbunden wird.

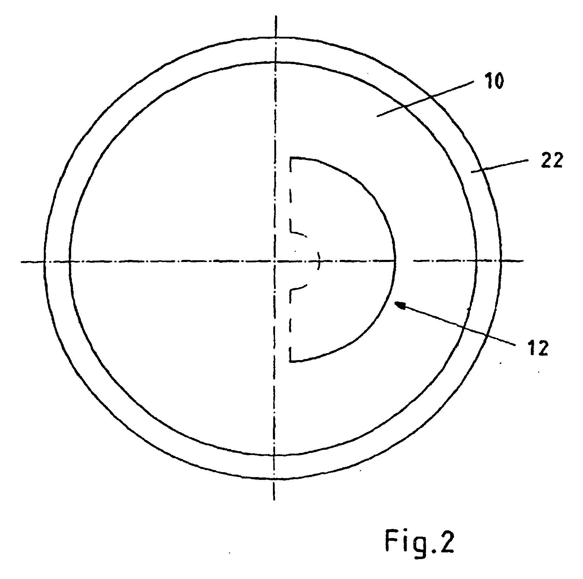

Fig. 2 zeigt eine Draufsicht auf die Vorrichtung. Hierbei ist die durch die Schlitzöffnung 12 gegebene Begrenzung der Dichtlippen 14, 16 in Form eines Kreisringabschnitts dargestellt. Je nach Länge des Kreisringabschnitts kann der maximale Öffnungsquerschnitt eingestellt werden.

Die erfindungsgemäße Vorrichtung kann in Gefäße integriert sein aber auch nachträglich angebracht werden. So wird sie bei einem Gährungsgefäß als Deckel angeordnet, wobei die Wölbung nach außen weist. Ein im Inneren des Gefäßes entstehender Überdruck kann so durch die Ventilöffnung entweichen, während das Gefäß ansonsten durch die Vorrichtung verschlossen ist und ein Gasübertritt in umgekehrter Richtung verhindert ist.

Bei einer Babyflasche wird die Vorrichtung im Boden angeordnet und die Wölbung weist in das Innere der Flasche. Während in der aufrechten Stellung der Eigendruck des Inhalts die Ventilöffnung verschließt, und so ein Auslaufen der Nahrung verhindert, wird in der gekippten Stellung bei eintretendem Unterdruck ein Nachströmen der Luft nach innen ermöglicht, wodurch das Saugen erleichtert wird.

## Patentansprüche

1. Vorrichtung zum Druckausgleich in unter Unterdruck stehenden Gefäßen, der beim Trinken oder Saugen entsteht, bestehend aus einer im Boden des Gefäßes angeordneten Wandung (10) aus elastischem Material mit einer Ventilöffnung, die als Schlitzöffnung (12) mit parallelen Dichtlippen (14, 16) ausgebildet ist und in einem gewölbt geformten Bereich der Wandung (10) angeordnet ist, wobei die Schlitzöffnung (12) bezogen auf die Oberfläche (18, 20) der Wandung (10) schräg von der einen (18) zur anderen Oberfläche (20) der Wandung (10) verläuft, **dadurch gekennzeichnet, daß** die Schlitzöffnung (12) bei nach oben weisender Wölbung flacher als die Flanken der Wölbung verläuft.

2. Vorrichtung nach Anspruch 1, **dadurch gekennzeichnet, daß** die Schlitzöffnung (12) in Projektion auf die Wölbung durch einen Kreisringabschnitt begrenzt ist.

3. Vorrichtung nach Anspruch 1 oder 2, **dadurch gekennzeichnet, daß** die Wölbung die Form eines Kugelabschnitts oder eines Kegels oder Kegelstumpfes besitzt.

4. Vorrichtung einem der Ansprüche 1 bis 3, **dadurch aekennzeichnet,** daß die Wandung (10) aus elastischem Material als Stirnwand eines Gefäßes lösbar mit einem Gefäßmantel verbunden ist.

5. Vorrichtung nach einem der Ansprüche 1 bis 4, **dadurch gekennzeichnet, daß** die Ventilöffnung mehrere Schlitzöffnungen (12) umfaßt.

## Claims

1. Device for pressure compensation in vessels with low pressure which occurs during drinking or sucking, comprising a wall (10) arranged in the base of the vessel and made of elastic material with a valve opening formed as a slot opening (12) with parallel sealing lips (14, 16) which is arranged in a dome-like part of the wall (10), where the slot opening (12) in relation to the surface (18, 20) of the wall (10) runs obliquely from one surface (18) to the other (20) of the wall (10), **characterised in that** when the dome points upwards the slot opening (12) is flatter than the flanks of the dome.

2. Device according to claim 1, **characterised in that** the slot opening (12) in projection onto the dome is limited by a ring section.

3. Device according to claim 1 or 2, **characterised in that** the dome has the form of a ball section or a cone or a truncated cone.

4. Device according to any of claims 1 to 3, **characterised in that** the wall (10) of elastic material as a face of a vessel is detachably connected to a vessel shell.

5. Device according to any of claims 1 to 4, **characterised in that** the valve opening comprises several slot openings (12).

## Revendications

1. Dispositif de compensation de la pression dans des récipients se trouvant sous vide, le vide étant formé lorsqu'on boit ou qu'on aspire, comprenant une paroi (10) disposée dans le fond du récipient, paroi qui est en matière élastique avec une ouverture de soupape conçue comme ouverture en forme de fente (12) avec des lèvres d'étanchéité parallèles (14, 16) et disposée dans une zone en forme de voûte de la paroi (10), l'ouverture en fente (12) s'étendant, par rapport à la surface (18, 20) de la paroi (10), diagonalement de l'une (18) à l'autre surface (20) de la paroi (10), **caractérisé en ce que** l'ouverture en forme de fente (12) s'étend, à voûte se dressant vers le haut, de manière moins inclinée que les flancs de la voûte.

2. Dispositif suivant la revendication 1, **caractérisé en ce que** l'ouverture en forme de fente (12) en projection sur la voûte est limitée par une section en forme d'anneau de cercle.

3. Dispositif suivant la revendication 1 ou 2, **caractérisé en ce que** la voûte possède la forme d'un segment sphérique, d'un cône ou d'un cône tronqué.

4. Dispositif suivant l'une des revendications 1 à 3, **caractérisé en ce que** la paroi (10) en matière élastique est une face avant d'un récipient qui est reliée de manière amovible avec une chemise du récipient.

5. Dispositif suivant l'une des revendications 1 à 4, **caractérisé en ce que** l'ouverture de soupape comprend plusieurs ouvertures en forme de fente (12).
